# EUROPÄISCHE PATENTSCHRIFT

(11) **EP 1 340 738 B1**
(45) Veröffentlichungstag und Bekanntmachung des Hinweises auf die Patenterteilung: **29.08.2012**
(21) Anmeldenummer: 02028905.4
(22) Anmeldetag: 23.12.2002
(51) Int. Cl.: C05G 3/08, C05G 3/00

(54) **Verfahren zur Herstellung von Mineraldüngemitteln**
Method for preparing mineral fertilizers
Méthode pour préparer les engrais minéraux

(30) Priorität: 24.12.2001 DE 10164104
(43) Veröffentlichungstag der Anmeldung: 03.09.2003
(73) Patentinhaber: K+S Nitrogen GmbH, 68165 Mannheim (DE)
(72) Erfinder: Meyer, Bernd, Dr., 69509 Mörlenbach (DE); Schleicher, Pirmin, 67105 Schifferstadt (DE); Reuvers, Johannes, Dr., 67591 Hohen-Sülzen (DE); Hagel, Erwin, 67069 Ludwigshafen (DE)

(56) Entgegenhaltungen:
- EP-A- 0 079 734
- EP-A- 0 529 473
- US-A- 5 654 033

## Beschreibung

Die Erfindung betrifft Verfahren zur Herstellung von Mineraldüngemitteln in Pulver-, Prill-, Kompaktat- oder Granulatform, die Nitrifikationsinhibitoren enthalten, durch Aufbringen einer mindestens einen Nitrifikationsinhibitor enthaltenden Lösung oder Suspension auf Mineraldüngemittel-Pulver, -Prills, -Kompaktate oder -Granulate in einer Mischvorrichtung. Die Erfindung betrifft ferner die Verwendung eines Kompaktmischers zur Aufbringung von Nitrifikationsinhibitoren auf Mineraldüngemittel.

Es ist bekannt, dass ammoniumhaltige Stickstoffdüngemittel im Boden durch Bakterien zu Nitrit und Nitrat umgewandelt werden. Diese Nitrifikation findet, insbesondere in durchlüfteten, neutral bis alkalisch reagierenden Böden verhältnismäßig rasch statt. Wegen seiner großen Beweglichkeit im Boden ist der Nitratstickstoff insbesondere in Gebieten mit hohen Niederschlagsmengen ständig von Auswaschungsverlusten bedroht. Es ist bekannt, zur Verlangsamung der Nitrifikation den ammoniumhaltigen Düngemitteln Nitrifikationsinhibitoren zuzusetzen. Diese Verbindungen können schon in geringen Konzentrationen die Wirkung der im Boden vorhandenen nitrifizierenden Bakterien verlangsamen, so dass das im Boden verhältnismäßig gut haftende Ammonium nur langsam in das zwar von den Pflanzen gut aufnehmbare, aber auch leicht auswaschbare Nitration umgewandelt wird. Solche Nitrifikationsinhibitoren enthaltende Stickstoffdüngemittel zeichnen sich demzufolge durch eine verzögerte Stickstoffzulieferung aus.

Als Nitrifikationsinhibitoren sind bereits eine Reihe von Verbindungen beschrieben worden, wie Dicyandiamid oder Pyrazolverbindungen.

Wichtig ist, dass der Nitrifikationsinhibitor fest mit dem Düngemittel verbunden ist. Die Aufbringung des Nitrifikationsinhibitors auf fertig granulierte Düngemittel hat häufig den Nachteil, dass der Nitrifikationsinhibitor nicht fest auf der Oberfläche haftet. Dies führt bei der Herstellung, Lagerung und Handhabung zu deutlichen Inhibitorverlusten. Bei der Verwendung von DCD ist die Handhabung des Düngemittels zusätzlich mit der Bildung von Abrieb verbunden, was wiederum zu lästigem Stauben führt.

Pyrazolverbindungen sind zudem leicht flüchtig. Dies kann sowohl bei der Aufbringung des Nitrifikationsinhibitors, insbesondere bei hohen Temperaturen (bis zu 140 °C), jedoch auch bei niedrigen Temperaturen als auch bei der Lagerung der mit dem Nitrifikationsinhibitor ausgerüsteten Düngemittel zu erheblichen Verlusten und damit gleichzeitig zu einer Beeinträchtigung der Umwelt führen, wenn es nicht gelingt, den Nitrifikationsinhibitor fest auf der Düngemitteloberfläche zu fixieren. Die reine Abmischung von Nitrifikationsinhibitor und Düngemittel reicht für eine feste Fixierung nicht aus.

In der DE-41 28 828 A1 sind ammonium- oder harnstoffhaltige Düngemittel und Verfahren zu ihrer Herstellung beschrieben. Die Düngemittel werden mit einem Salz aus 3-Methylpyrazol und einer Säure haftfest überzogen. In einer Sprühvorrichtung oder Mischvorrichtung wie einer Mischtrommel wird eine möglichst konzentrierte wässrige Salzlösung auf das Düngemittel aufgebracht. Nach dem Aufbringen und Fixieren des Salzes kann zusätzlich noch ein Wachs aufgebracht werden, wodurch man einen wirksamen Einschluss des Nitrifikationsinhibitors auch bei längerer Lagerung unter möglicherweise ungünstigen Bedingungen erhält.

3-Methylpyrazol ist extrem flüchtig, übelriechend und mutagen. Daher darf zur Verhinderung zu hoher Verluste 3-Methylpyrazol enthaltendes Düngemittel keinen hohen Temperaturen ausgesetzt werden. Aus diesem Grunde wird das Düngemittel beim Besprühen und beim nachfolgenden Trocknen nur bei niedrigen Temperaturen behandelt. Aufgrund der Hygroskopizität der Basisdünger ist jedoch bei niedrigen Temperaturen häufig keine ausreichende Trocknung zu erzielen. Durch die eingesetzten konzentrierten Lösungen in der Mischtrommel werden teilweise nicht ausreichend homogene Beschichtungen erzielt.

Eine homogenere Verteilung des Inhibitors auf der Düngemitteloberfläche lässt sich erzielen, wenn an Stelle konzentrierter Inhibitorenlösungen verdünnte Lösungen eingesetzt werden. Das auf das Düngemittel aufgebrachte Lösungsmittel, in der Regel Wasser, muss jedoch aus Qualitätsgründen nachfolgend wieder verdampft werden, bevor der Dünger eingelagert werden kann.

Üblicherweise werden zur Aufbringung der Nitrifikationsinhibitoren enthaltenden Lösungen Mischtrommeln oder Granulierteller eingesetzt. Ein derartiges Vorgehen ist beispielsweise in DE 41 28 828 A1 und DE25 31 962 A1 beschrieben. Gemäß der letztgenannten Schrift werden Röhnradrollierer, d.h. diskontinuierliche Taumelmischer ohne Einbauten, oder Schneckenrollierer eingesetzt, die jedoch nur eine vergleichsweise geringe Mischwirkung zeigen. Diese geringe Mischwirkung kann nicht durch längere Verweilzeiten im Mischer ausgeglichen werden, da bei Verwendung von konzentrierten Inhibitorlösungen nach der Aufbringung nur eine relativ kurze Mischzeit zur Verfügung steht. Nach dieser Zeit ist die Inhibitorlösung weitgehend in das Düngerkorn eingezogen und läßt sich anschließend durch weiteres Mischen nicht mehr auf die benachbarten Düngerkörner übertragen oder weiter verteilen. Ferner haben die Mischtrommeln den Nachteil, dass sie nur kleine Füllgrade von etwa bis zu 30 % zulassen. Dies hat zur Folge, dass zur Erzielung eines hohen Durchsatzes große Trommeln benötigt werden, was wiederum einen großen Investitionsbedarf erfordert.

Aufgabe der vorliegenden Erfindung ist die Bereitstellung eines Verfahrens zur Herstellung von Mineraldüngemitteln in Pulver-, Prill-, Kompaktat- oder Granulatform, die Nitrifikationsinhibitoren enthalten, durch Aufbringen einer mindestens einen Nitrifikationsinhibitor enthaltenden Lösung oder Suspension auf Mineraldüngemittel-Pulver, -Prills, - Kompaktate oder -Granulate in einer Mischvorrichtung, das die Nachteile der bestehenden Verfahren vermeidet. Insbesondere soll das Verfahren kostengünstig sein und eine homogene Verteilung des Nitrifikationsinhibitors auf der Düngemitteloberfläche ermöglichen, ohne dass negative Auswirkungen auf die Produktqualität und auf die Umwelt resultieren.

Die Aufgabe wird erfindungsgemäß gelöst durch ein derartiges Herstellungsverfahren, bei dem das Aufbringen in einem Kompaktmischer oder im Zulauf eines Kompaktmischers erfolgt, der bewegte Mischereinbauten aufweist, die mit einer Umfangsgeschwindigkeit von maximal 10 m/s angetrieben werden und in dem der Abstand zwischen den Mischereinbauten und der Mischerwand mindestens so groß wie der maximale Korndurchmesser des Mineraldüngemittels ist, und wobei der Kompaktmischer mit einer mittleren Verweilzeit von 15 bis 300 Sekunden betrieben wird.

Die Lösung oder Suspension soll bevorzugt in einer so hohen Konzentration eingesetzt werden, dass sich der Wassergehalt im Düngemittel nach der Aufbringung um maximal 1 Gew.-% erhöht, bezogen auf das Mineraldüngemittel vor dem Aufbringen.

Es wurde insbesondere erfindungsgemäß gefunden, dass beim Einsatz konzentrierter Lösungen oder Suspensionen von Nitrifikationsinhibitoren und damit der Aufbringung geringer Flüssigkeitsmengen auf die Mineraldüngemittel eine homogene Verteilung erreicht werden kann, wenn die Aufbringung in einem Kompaktmischer oder im Zulauf eines Kompaktmischers erfolgt, der mit den vorstehend genannten Parametern betrieben wird.

Aufgrund des Einsatzes konzentrierter Lösungen oder Suspensionen sind keine aufwendigen Trocknungsschritte notwendig, wodurch keine Reinigung von Trocknungsoder Kühlgasen erforderlich ist.

Die Kompaktmischer erlauben einen hohen Volumendurchsatz, wobei durch das angegebene Mischungsverfahren eine sehr homogene Verteilung der Lösung oder Suspension auf der Oberfläche des Mineraldüngemittels sichergestellt wird.

Vorzugsweise beträgt die mittlere Verweilzeit im Kompaktmischer 15 bis 100 Sekunden, insbesondere 30 bis 60 Sekunden.

Die Umfangsgeschwindigkeit der Mischereinbauten beträgt vorzugsweise 0,5 bis 3 m/s, insbesondere 1 bis 3 m/s.

Vorzugsweise wird die Lösung oder Suspension in einer Menge von 0,05 bis 5 Gew.-% Inhibitor, bei Verwendung von 3,4-Dimethylpyrazolphosphat (3,4-DMPP) bevorzugt 0,05 bis 1,0 Gew.-%, bezogen auf das Mineraldüngemittel vor dem Aufbringen, speziell Aufsprühen, eingesetzt.

Der im erfindungsgemäßen Verfahren eingesetzte Nitrifikationsinhibitor kann aus allen bekannten geeigneten Nitrifikationsinhibitoren ausgewählt sein. Beispielsweise kann es sich dabei um Dicyandiamid oder eine Pyrazolverbindung handeln. Der Einsatz von Dicyandiamid ist beispielsweise in FR 1 232 366 A1 beschrieben.

Bevorzugt werden erfindungsgemäß Pyrazolderivate als Nitrifikationsinhibitoren eingesetzt, die auch als Säureadditionssalz vorliegen können. Geeignete Pyrazolverbindungen sind beispielsweise in DD 2 22 471 A3, DD 2 47 894 A1, US 3,635,690, US 4,522,624, US 4,523,940, DD 2 30 523 A3, DE 41 28 828 A1 und DE 196 31 764 A1 beschrieben. Besonders bevorzugt eingesetzte Nitrifikationsinhibitoren sind in der letztgenannten DE 196 31 764 A1 beschrieben. Besonders bevorzugt sind 3,4-Dimethylpyrazol, 4-Chlor-3-methylpyrazol, N-Hydroxymethyl-3,4-dimethylpyrazol, N-Hydroxymethyl-4-Chlor-3-methylpyrazol sowie Säureadditionssalze davon, insbesondere in mineralsaurer Lösung. Als Säure werden insbesondere Mineralsäuren wie Salzsäure, Schwefelsäure oder insbesondere Phosphorsäure eingesetzt. Beispielsweise kann 3,4-Dimethylpyrazol in einer konzentrierten Phosphorsäurelösung eingesetzt werden. Es können jedoch auch Nitrate, Chloride, Sulfate, Salze organischer Säuren wie z.B. Acetate, Oxalate und Polysulfonate aufgebracht werden. Als Säure kann auch die sogenannte NP-Säure verwendet werden, die Phosphorsäure und Salpetersäure enthält und beim Aufschluss von Rohphosphaten mit Salpetersäure (Odda-Prozess) entsteht. Zur Erkennung der Homogenität der inhibierten Dünger kann der Inhibitorlösung auch ein Farbstoff zugesetzt werden. Die bevorzugte Inhibitorformulierung besteht aus einer Lösung von 3,4-Dimethylpyrazolphosphat in konz. Phosphorsäure (ca. 85 %ig) mit einem Farbstoffzusatz.

Bevorzugt werden die Pyrazolderivate in einer Konzentration von 20 bis 50 Gew.-%, berechnet als Salz einer Säure, bezogen auf die gesamte Lösung oder Suspension, eingesetzt. Es können auch Gemische zweier oder mehrerer Nitrifikationsinhibitoren erfindungsgemäß eingesetzt werden. Insbesondere werden wässrige mineralsäurehaltige Lösungen oder Suspensionen der Nitrifikationsinhibitoren eingesetzt. Bei der erfindungsgemäßen Aufbringung des Inhibitors in wäßriger mineralsäurehaltiger Lösung ist es vorteilhaft, dass zur Vermeidung negativer Auswirkungen auf die Lagereigenschaften des Düngers mit dem Inhibitor nicht zuviel Feuchtigkeit eingeschleppt wird. Der Wassergehalt des Düngers sollte sich durch die Aufbringung der Inhibitorenlösung nicht um mehr als 1,0 %, in der bevorzugten Ausführungsweise höchstens um 0,05 bis 0,3 % erhöhen. Denkbar ist auch, dass der Dünger nach der Inhibitoraufbringung noch leicht nachgetrocknet wird. Dies kann jedoch nur bei schwerflüchtigen Pyrazolderivaten wie z.B. beim 3,4-Dimethylpyrazol erfolgen. Bei letzteren sind jedoch auch Temperaturen > 100°C und/oder größere Gasdurchsätze bevorzugt zu vermeiden. Zu bevorzugen ist der Einsatz so hoch konzentrierter Inhibitorenlösung, dass deren Aufbringung lediglich zu einer Erhöhung des Wassergehaltes des Basisdüngers um 0,05 - 0,3 % führt. In diesem Fall sind die Auswirkungen auf die Lagereigenschaften des Düngers nur marginal, zudem kann auf eine Trocknung des inhibierten Düngers verzichtet werden, wodurch signifikante Verluste bei der Aufbringung des Inhibitors verhindert werden können. Die Konzentration des Nitrifikationsinhibitors in der Lösung oder Suspension und die auf das Mineraldüngemittel aufgebrachte Menge werden vorzugsweise so abgestimmt, dass das Mineraldüngemittel 0,01 bis 5 Gew.-%, bei 3,4-DMPP besonders bevorzugt 0,05 bis 0,5 Gew.% an Nitrifikationsinhibitor aufweist. Die im Einzelfall eingesetzte Menge kann je nach Lager-und Düngungsbedingungen frei gewählt werden.

Erfindungsgemäß können alle bekannten ammonium- oder harnstoffhaltigen Mineraldüngemittel eingesetzt werden. Insbesondere zu nennen sind in diesem Zusammenhang die NPK-Dünger, d.h. Düngemittel, die Stickstoff, Phosphor und Kalium enthalten, Kalkammonsalpeter, d.h. Düngemittel, die noch Ca enthalten, Ammonsulfatsalpeter (allgemeine Formen (NH₄)₂SO₄ NH₄NO₃), Ammonphosphat und Ammonsulfat. Auch Harnstoff ist einsetzbar, die ammoniumhaltigen Düngemittel sind jedoch bevorzugt. Diese Düngemittel sind dem Fachmann allgemein bekannt (siehe z.B. Ullmann's Encyclopedia of Industrial Chemistry, 5. Edition, Vol. A 10, 323-431, Verlagsgesellschaft, Weinheim, 1987). Die Düngemittel können auch noch weitere Nährstoffe enthalten, wie etwa Magnesium oder Spurennährstoffe. Bevorzugte ammoniumhaltige Düngemittel sind NPK-Düngemittel, Kalkammonsalpeter, Ammonsulfatsalpeter, Ammoniumsulfat oder Ammoniumphosphat. Die erfindungsgemäß behandelten Mineraldüngemittel können in Form von Pulvern, Granulaten, Prills oder Kompaktaten vorliegen. Vorzugsweise liegen die Mineraldüngemittel als Granulate mit einer mittleren Korngröße im Bereich von 0,1 bis 7,0 mm, besonders bevorzugt 0,5 bis 5 mm vor.

Erfindungsgemäß kann vor, während oder nach dem Aufsprühen der mindestens einen Nitrifikationsinhibitor enthaltenden Lösung oder Suspension das Mineraldüngemittel mit einem Antibackmittel und/oder Versiegelungsmittel behandelt werden. Die Aufbringung des Antiback- und/oder Umhüllungsmittels kann sowohl in dem Kompaktmischer als auch in einer vor- oder nachgeschalteten Apparatur, z.B. einer Mischtrommel, erfolgen. Geeignete Antibackmittel und Versiegelungsmittel sind beispielsweise in DE 19 05 834 A1, DE 41 28 828 A1 und DE 196 31 764 A1 beschrieben. Geeignete Mittel sind beispielsweise natürliche oder synthetische Wachse wie Polyethylen- und/oder Polypropylenwachs mit einem mittleren Molekulargewicht von 500 bis 10.000 oder auch anorganische oder organische Polysäuren. Als organische Polysäuren können beispielsweise Isopolysäuren oder Heteropolysäuren verwendet werden, insbesondere Polyphosphorsäuren oder Polykieselsäuren. Als organische Polysäuren kommen solche Polymere in Betracht, die eine Mehrzahl von freien Carbonsäuregruppen aufweisen. Dabei kann es sich um Homo- oder Copolymere handeln. Als carboxylgruppenhaltige bzw. carbonsäuregruppenhaltige Monomere kommen insbesondere monoethylisch ungesättigte Mono- oder Dicarbonsäuren mit 3 bis 6 Kohlenstoffatomen oder deren entsprechende Anhydride in Betracht, beispielsweise Acrylsäure, Methacrylsäure, Ethylacrylsäure, Allylessigsäure, Crotonsäure, Vinylessigsäure, Maleinsäure, Itaconsäure, Mesaconsäure, Fumarsäure, Citraconsäure, Methylenmalonsäure sowie deren Ester und Gemische davon. Geeignete Polysäuren sind in der DE 196 31 764 A1 näher erläutert.

Geeignete Hüllpolymere sind ferner in EP 0 877 722 A1 beschrieben. Dabei kann neben den dort in einer Aufzählung genannten Polymeren insbesondere auf carboxygruppentragende Ethylencopolymerisate hingewiesen werden, bei denen die Carboxylgruppen auch in Form ihrer Salze vorliegen können. Diese carboxylgruppentragenden Ethylencopolymere sind vorzugsweise aufgebaut aus 75 bis 90 Gew.-%, bevorzugt 75 bis 85 Gew.-% Ethylen und 10 bis 25 Gew.-%, bevorzugt 15 bis 25 Gew.-% einer α-olifenisch ungesättigten C₃ bis C₈-Carbonsäure. Als Carbonsäure kommen insbesondere Acrylsäure, Methacrylsäure, Crotonsäure, Maleinsäure, Fumarsäure oder Itaconsäure sowie Gemische davon in Betracht.

Erfindungsgemäß beträgt die Temperatur des Mineraldüngemittels beim Aufbringen, insbesondere Aufsprühen der mindestens eine Nitrifikationsinhibitor enthaltenden Lösung oder Suspension vorzugsweise maximal 90°C.

Die Aufbringung der Inhibitorlösung kann sowohl vor und/oder auch nach einer möglichen Behandlung mit Antibackmittel vorgenommen werden. Wird die Aufbringung des Inhibitors nach der Antibackbehandlung vorgenommen, so kann ein hochschmelzendes Antibackmittel, (z.B. ein Wachs), bei hohen Temperaturen auf den Dünger aufgebracht werden. Anschließend soll der Dünger mindestens auf ca. 90°C abgekühlt werden, um zu hohe Verluste durch Verflüchtigung des Inhibitors zu verhindern. Wird die Antibackmittelbehandlung nach der Inhibitoraufbringung vorgenommen, so sollten niedrig schmelzende Antibackmittel, z.B. eine aminhaltige Formulierung, verwendet werden, um noch eine ausreichend homogene Verteilung des Antibackmittels auf der zumindest teilweise abgekühlten Düngeroberfläche zu erzielen. Besonders vorteilhaft ist es, den Dünger bei hohen Temperaturen mit einem hochschmelzenden Antibackmittel zu behandeln, den Dünger abzukühlen, anschließend die Inhibitorlösung aufzubringen und nachher noch eine Nachbehandlung mit einem niedrigschmelzenden Antibackmittel vorzunehmen.

Als Kompaktmischer kommen insbesondere Paddel- oder Pflugscharmischer in Frage wie sie z.B. in Ullmann's Enzyclopedia, Sixth Edition, 2000 Electronic Release, Mixing of Solids beschrieben sind. Sie bestehen aus einem feststehenden Trog mit einer oder mehreren rotierenden Wellen, die wiederum mit Mischwerkzeugen versehen sind. Die Mischwerkzeuge wiederum können Paddel, Schaufeln oder Pflugschare darstellen. Die Mischwerkzeuge werden normalerweise mit einer Geschwindigkeit von 10 - 40 m/s, erfindungsgemäß aber mit maximal oder weniger als 10 m/s, betrieben. Im Betrieb erzeugen sie auf mechanische Weise eine Art Wirbelbett, wodurch eine starke Vermischung der einzelnen Komponenten innerhalb kürzester Zeit erzielt werden kann. Die Paddelmischer können sowohl in kontinuierlicher als auch diskontinuierlicher Bauart verwendet werden.

Die Kompaktmischer haben den Vorteil, dass sie relativ kompakt bauen und damit auch nur einen geringen Investitionsmittelbedarf haben. In einem kontinuierlichen Mischer reicht z.B. für einen Durchsatz von 2t/h ein Mischervolumen von ca. 25 Liter und für einen Durchsatz von 100 t/h ein Volumen von ca. 1 m³ aus. Die Mischwirkung ist jedoch so groß, dass nach einer Verweilzeit von z.B. nur 20 bis 60 sec. die Düngergranulate mit benachbarten Granulaten so häufig in Kontakt kommen, dass eine homogene Verteilung der Inhibitorlösung durch Abstempeln erzielt wird.

Düngemittel sind jedoch spröde und haben im allgemeinen rauhe Oberflächen. Bei mechanischer Belastung besteht daher große Gefahr, dass Abrieb gebildet oder sogar die gesamte Kornstruktur zerstört wird. Es wurde nun gefunden, dass trotz der relativ hohen Mischwirkung eine homogene Verteilung der Inhibitorlösung in einem Kompaktmischer zu erzielen ist, ohne dass eine mechanische Schädigung des Düngers eintritt, wenn die vorstehend und nachstehend genannten Bedingungen eingehalten werden.

Bevorzugt sind insbesondere für den Abstand zwischen Mischereinbauten und Mischerwand (Trogwand) Werte zwischen dem Eineinhalbfachen und Doppelten des maximalen Korndurchmessers.

Zur Erzielung einer optimalen Verteilung der Inhibitorenlösung auf der (Granulat)oberfläche ist es von Vorteil, dass die Inhibitorenlösung bei der Aufgabe bereits gut vorverteilt wird. Dies kann erzielt werden, indem die Inhibitorlösung entweder im Zulauf zum Mischer oder unmittelbar nach dem Eintritt in den Mischer auf das Düngergranulat aufgebracht, speziell aufgedüst wird. Die Verteilung des Inhibitors kann rein optisch sehr leicht erkannt werden, wenn man der Inhibitorlösung vor der Aufbringung einen Farbstoff zusetzt.

Die Homogenität der Produkte kann z.B. an der Verteilung des Farbstoffes auf der Granulatoberfläche rein optisch oder mit Hilfe einer "Scanner-Methode" ermittelt werden. Bei der Scannermethode wird auf einen handelsüblichen Scanner eine Monolage des inhibierten und mit Farbmittel versehenen Düngemittels aufgebracht und mit Hilfe bildanalytischer Programme der Bunttonwinkel jedes einzelnen Partikels bestimmt. Über statistische Auswertung zeigt dann die Standardabweichung des Bunttonwinkels gegenüber dem Mittelwert des Bunttonwinkels die Verteilung des Inhibitors an. Die auf diese Weise ermittelte Streuung des mittleren Farbtons (SMH) ist um so geringer je niedriger die Zahl ist.

Die Erfindung wird durch die nachstehenden Beispiele näher erläutert.

### Beispiele

Beispiel 1 (Vergleich): Im Zulauf zu einer Drehtrommel mit einem Durchmesser von 3 m und einer Länge von 16 m wurden auf Umgebungstemperatur abgekühlten granulierten und bereits mit einem Antibackmittel behandelten Ammoniumsulfatsalpeter-Dünger (ASS-Dünger) pro Tonne Dünger 0,19 % 3,4-Dimethylpyrazolphosphat in Form einer konzentrierten phosphorsäurehaltigen Lösung mit einem Wassergehalt von ca. 18 % aufgedüst. Zur Ermittlung der Homogenität der Verteilung des Inhibitors auf der Granulatoberfläche wurde der Inhibitorlösung zudem ein grüner Farbstoff (z.B. Dispersgün 8730) zugesetzt. Die Drehtrommel wurde mit einer Leistung von 50 t/h beaufschlagt. Die Umfangsgeschwindigkeit betrug ca. 0,6 m/sec, die Verweilzeit der Granulate in der Trommel ca. 30 min. Der Teilchendurchmesser des ASS-Düngers lag zwischen 2 und 5 mm.

Mit der Scanner-Methode wurde beim resultierenden inhibierten Dünger ein SMH-Wert von 7,8 ermittelt. Durch die Zugabe der Inhibitorlösung erhöht sich der Wassergehalt des ASS-Basisdüngers nur um 0,1 %.

### Beispiel 2:

Zur Prüfung der in einem Kompaktmischer erzielbaren Homogenität bei der Aufbringung hoch konzentrierter Lösungen wurde in verschiedenen Technikumskompaktmischern entsprechende Ausrüstungsversuche durchgeführt. Basisdünger und Inhibitorlösungen entsprechen den Angaben in Beispiel 1. Die Aufgabe der Inhibitorenlösung erfolgte im Zulauf zum Kompaktmischer.

Mit den getesteten Mischertypen wurden SMH-Werte zwischen 3 und 5,5 ereicht. Bei den angeführten Bedingungen waren keinerlei Schädigungen der Kornstruktur des Düngers zu beobachten. Weder eine Staubentwicklung noch eine Bruchkornbildung war feststellbar. Der Wassergehalt des Basisdüngers erhöhte sich durch die Zugabe der Inhibitorlösung ebenfalls um nur 0,1 %.

### Beispiel 3 (Vergleich):

Der Versuch wurde bei ähnlichen Bedingungen wie im Beispiel C2 durchgeführt. Die Umfangsgeschwindigkeit des Mischwerkzeuges wurde jedoch von 2,8 m/sec auf 15 m/sec erhöht. Der resultierende Dünger enthielt eine große Anzahl von Bruchkörnern, was auf eine starke Schädigung des Düngers beim Durchgang durch den Mischer hinweist.

## Patentansprüche

1. Verfahren zur Herstellung von Mineraldüngemitteln in Pulver-, Prill-, Kompaktatoder Granulatform, die Nitrifikationsinhibitoren enthalten, durch Aufbringen einer mindestens einen Nitrifikationsinhibitor enthaltenden Lösung oder Suspension auf Mineraldüngemittel-Pulver, -Prills, -Kompaktate oder -Granulate in einer Mischvorrichtung, **dadurch gekennzeichnet, dass** das Aufbringen in einem Kompaktmischer oder im Zulauf eines Kompaktmischers erfolgt, der bewegte Mischereinbauten aufweist, die mit einer Umfangsgeschwindigkeit von maximal 10 m/s angetrieben werden und in dem der Abstand zwischen den Mischereinbauten und der Mischerwand mindestens so groß wie der maximale Korndurchmesser des Mineraldüngemittels ist, und wobei der Kompaktmischer mit einer mittleren Verweilzeit von 15 bis 300 Sekunden betrieben wird

2. Verfahren nach Anspruch 1, **dadurch gekennzeichnet, dass** mit der Lösung oder Suspension maximal 1 Gew.-% Wasser auf den Dünger aufgebracht wird, bezogen auf das Mineraldüngemittel vor dem Aufbringen.

3. Verfahren nach Anspruch 1 oder 2, **dadurch gekennzeichnet, dass** die Umfangsgeschwindigkeit der Mischereinbauten 0,5 bis 10 m/s, bevorzugt 0,5 bis 3 m/s beträgt.

4. Verfahren nach einem der Ansprüche 1 bis 3, **dadurch gekennzeichnet, dass** die Lösung oder Suspension in einer solchen Menge aufgebracht wird, dass das Mineraldüngemittel 0,05 bis 5 Gew.-% des Nitrifikationsinhibitors oder des Säureadditionsalzes davon, bezogen auf das Mineraldüngemittel vor dem Aufbringen, enthält.

5. Verfahren nach einem der Ansprüche 1 bis 4, **dadurch gekennzeichnet, dass** der Kompaktmischer ein Paddel- oder Pflugscharmischer ist.

6. Verfahren nach einem der Ansprüche 1 bis 5, **dadurch gekennzeichnet, dass** der Nitrifikationsinhibitor ein Pyrazoldetivat ist, das auch als Säureadditionssalz vorliegen kann.

7. Verfahren nach Anspruch 6, **dadurch gekennzeichnet, dass** der Nitrifikationsinhibitor 3,4-Dimethylpyrazol oder ein Phosphorsäureadditionssalz in mineralsaurer Lösung ist.

8. Verfahren nach einem der Ansprüche 1 bis 7, **dadurch gekennzeichnet, dass** die Temperatur des Mineraldüngemittels beim Aufbringen maximal 90°C beträgt.

9. Verfahren nach einem der Ansprüche 1 bis 8, **dadurch gekennzeichnet, dass** vor, während und/oder nach dem Aufbringen der mindestens einen Nitrifikationsinhibitor enthaltenden Lösung oder Suspension das Mineraldüngemittel mit einem Antibackmittel und/oder Versiegelungsmittel behandelt wird.

10. Verwendung von Kompaktmischern, die bewegte Mischereinbauten aufweisen, die mit einer Umfangsgeschwindigkeit von maximal 10 m/s angetrieben werden, zur Herstellung von Mineraldüngemitteln in Pulver-, Prill-, Kompaktat- oder Granulatform, auf die eine, mindestens einen Nitrifikationsinhibitor enthaltende, Lösung oder Suspension aufgebracht wird, wobei der Abstand zwischen den Mischereinbauten und der Mischerwand mindestens so groß wie der maximale Korndurchmesser des Mineraldüngemittels ist, und die mittlere Verweilzeit im Kompaktmischer 15 bis 300 Sekunden ist.

## Claims

1. Process for the manufacture of mineral fertilizers in powder, prill, compacted or granulate form, which include nitrification inhibitors, through the application of a solution or suspension, which includes at least one nitrification inhibitor, on mineral fertilizer powder, prill, compacted material or granulate in a mixing device, **characterized in that** the application is implemented in a compact mixer or in the supply flow of a compact mixer, which indicates moving mixer equipment items which are driven with a circumferential speed of maximum 10 m/s, and in which the separation distance between the mixer equipment and the mixer wall is at least as large as the maximum grain diameter of the mineral fertilizer, and where the compact mixer is operated with a mean dwell time of 15 to 300 seconds

2. Process according to Claim 1, **characterized in that**, with the solution or suspension, a maximum of I wt.% water is applied on the fertilizer, with reference to the mineral fertilizer, prior to the application.

3. Process according to Claim 1 or 2, **characterized in that** the circumferential speed of the mixer equipment items is 0.5 to 10 m/s, preferably 0.5 to 3 m/s.

4. Process according to one of the Claims 1 to 3, **characterized in that** the solution or suspension is applied in such a quantity that the mineral fertilizer includes 0.05 to 5 wt.% of the nitrification inhibitor or the acid additive salt, with reference to the mineral fertilizer prior to the application.

5. Process according to one of the Claims 1 to 4, **characterized in that** the compact mixer is a paddle or plowshare mixer.

6. Process according to one of the Claims 1 to 5, **characterized in that** the nitrification inhibitor is a pyrazole derivative, which can also be present as an acid additive salt.

7. Process according to Claim 6, **characterized in that** the nitrification inhibitor is 3.4-dimethyl pyrazole or a phosphoric acid additive salt in mineral-acidic solution.

8. Process according to one of the Claims 1 to 7, **characterized in that** the temperature of the mineral fertilizer is maximum 90°C during application.

9. Process according to one of the Claims 1 to 8, **characterized in that** before, during and/or after the application of the solution or suspension, which includes at least one nitrification inhibitor, the mineral fertilizer is treated with an anti-caking agent and/or sealing agent.

10. Utilization of compact mixers which indicate moving mixer equipment items, which are driven with a circumferential speed of maximum 10 m/s, for the manufacture of mineral fertilizers in powder, prill, compact or granulate form, on which a solution or suspension, including at least one nitrification inhibitor, is applied, where the separation distance between the mixer equipment and the mixer wall is at least as large as the maximum grain diameter of the mineral fertilizer, and the mean dwell time in the compact mixer is 15 to 300 seconds.

## Revendications

1. Procédé pour la fabrication d'engrais minéraux sous la forme de poudre, prills, pastilles ou granulés qui contiennent des inhibiteurs de nitrification, par application d'une solution ou suspension contenant au moins un inhibiteur de nitrification, sur poudre, prills, pastilles ou granulés d'engrais minéral, dans un dispositif de mélange, **caractérisé en ce que** l'application s'effectue dans un mélangeur compact ou dans l'alimentation d'un mélangeur compact qui présente des inserts mobiles entraînés à une vitesse circonférentielle de 10 m/s au maximum et dans lequel la distance entre les inserts du mélangeur et la paroi du mélangeur est au moins égale au diamètre de grain maximum de l'engrais minéral, et le mélangeur compact étant exploité moyennant un temps de séjour moyen de 15 à 300 secondes.

2. Procédé selon revendication 1, **caractérisé en ce que** l'on applique sur l'engrais, avec la solution ou la suspension, 1% en poids d'eau au maximum, rapporté à l'engrais minéral avant l'application.

3. Procédé selon revendication 1 ou 2, **caractérisé en ce que** la vitesse circonférentielle des inserts du mélangeur est comprise entre 0,5 et 10 m/s, de préférence entre 0,5 et 3 m/s.

4. Procédé selon l'une des revendications 1 à 3, **caractérisé en ce que** la solution ou la suspension est appliquée dans une quantité telle que l'engrais minéral contient 0,05 à 5 % en poids de l'inhibiteur de nitrification ou du sel d'addition d'acide de celui-ci, rapporté à l'engrais minéral avant l'application.

5. Procédé selon l'une des revendications 1 à 4, **caractérisé en ce que** le mélangeur compact est un mélangeur à palettes ou à soc de charrue.

6. Procédé selon l'une des revendications 1 à 5, **caractérisé en ce que** l'inhibiteur de nitrification est un dérivé de pyrazole qui peut également se présenter en tant que sel d'addition d'acide.

7. Procédé selon revendication 6, **caractérisé en ce que** l'inhibiteur de nitrification est du 3,4-diméthylpyrazole ou un sel d'addition d'acide phosphorique en solution acide minérale.

8. Procédé selon l'une des revendications 1 à 7, **caractérisé en ce que** la température de l'engrais minéral est de 90°C au maximum lors de l'application.

9. Procédé selon l'une des revendications 1 à 8, **caractérisé en ce que** avant, pendant et/ou après l'application de la solution ou de la suspension contenant au moins un inhibiteur de nitrification, l'engrais minéral est traité avec un agent antiagglomérant et/ou un agent de scellement.

10. Utilisation de mélangeurs compacts, qui présentent des inserts mobiles entraînés à une vitesse circonférentielle de 10 m/s au maximum, pour la fabrication d'engrais minéraux sous la forme de poudre, prills, pastilles ou granulés, sur lesquels on applique une solution ou suspension contenant au moins un inhibiteur de nitrification, la distance entre les inserts du mélangeur et la paroi du mélangeur étant au moins égale au diamètre de grain maximum de l'engrais minéral, et le temps de séjour moyen dans le mélangeur compact étant de 15 à 300 secondes
